(19) Europäisches Patentamt / European Patent Office / Office européen des brevets

(11) **EP 2 656 499 B1**

(12) **EUROPEAN PATENT SPECIFICATION**

(45) Date of publication and mention of the grant of the patent:
**01.01.2020 Bulletin 2020/01**

(51) Int Cl.:
*H02P 9/00* *(2006.01)*    *F03B 15/00* *(2006.01)*
*F03B 17/06* *(2006.01)*

(21) Application number: **11784756.6**

(22) Date of filing: **10.11.2011**

(86) International application number:
**PCT/GB2011/052184**

(87) International publication number:
**WO 2012/085524 (28.06.2012 Gazette 2012/26)**

(54) **CONTROL OF WATER CURRENT TURBINES**

STEUERUNG VON WASSERSTROMTURBINEN

COMMANDE D'HYDROLIENNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2010 GB 201021809**

(43) Date of publication of application:
**30.10.2013 Bulletin 2013/44**

(73) Proprietor: **Tidal Generation Limited Stafford, ST17 4LX (GB)**

(72) Inventors:
 • **KING, Jeremy**
  **Park Row**
  **Bristol BS1 5UB (GB)**

 • **VIGARS, Paul**
  **Park Row**
  **Bristol BS1 5UB (GB)**

(74) Representative: **Openshaw & Co.**
  **8 Castle Street**
  **Farnham, Surrey GU9 7HR (GB)**

(56) References cited:
**EP-A2- 1 939 396      WO-A2-2009/016508**
**JP-A- 2003 319 694      US-A1- 2003 218 338**
**US-A1- 2005 012 339      US-A1- 2005 012 339**

## Description

The present invention relates to the control of water current turbines.

## BACKGROUND OF THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The drivetrain may include a gearbox. The rotor assembly includes a plurality of rotor blades that are driven by the water flow, so as to turn an input shaft of the drivetrain. The rotor blades may be coupled directly to the input shaft, or may be attached via a hub or similar.

Water current turbine rotor blades generate high thrust loadings on the turbine assembly and drivetrain components. In order to remain economically viable, it is desirable to limit such loadings, so that the components are kept within acceptable limits of size, weight and cost. Water current turbines have a "rated power" for which the components of the turbine are designed. In a typical installation, the water current flow rate can be expected to reach a level above which an uncontrolled turbine would operate at a higher generating level than the rated power level. Operating at such a high level results in loads on the turbine equipment which are greater than the loads for which the equipment is rated. It is, therefore, necessary to limit the level at which the turbine operates.

One previously-considered control scheme provides a braking force on a shaft of the drivetrain, in order to slow the rotational speed of the drivetrain. Such a scheme, however, is merely a technique to overcome the high input power provided by the rotor assembly. Accordingly, another previously-considered technique is to provide variable pitch rotor blades that can be controlled to reduce the amount of power developed by the rotor assembly, and hence delivered to the drivetrain. The variation of blade pitch angle in such systems reduces the power coefficient of the blade, which results in lower power generation for a given flow speed. However, variable pitch blade systems are complex, expensive and open to failure.

Another previously-considered control scheme, such as described in US Patent Application 2010/0109325, uses a closed loop control system which operates according to well-known set point tracking techniques, using a calculated a power level in order to limit the rotor speed to an acceptable level. However, such a system is complex, as it requires the use of a predefined mathematical model of the turbine in combination with a system for providing incremental adaptation of the working point of the generator based on that model, in order to provide a power optimal state of the apparatus.

Patent applications publications WO 2009/016508 and JP 2003 319694 disclose other previously-considered control schemes for water current turbines. US 2005 012339 relates to a variable speed distributed drive train wind turbine system.

It is, therefore, desirable to provide a control system and method that enables simple, but effective, control of a water current turbine.

## SUMMARY OF THE INVENTION

Aspects of the present invention are set out in the attached claims According to one aspect of the present invention, there is provided a method of controlling a water current turbine which includes a rotor assembly arranged to drive a generator, the method comprising adjusting the electrical torque of the generator to control only the output power of the generator, characterised in that such adjustment being a function only of a required output power level and a measured rotational speed of the rotor assembly or generator.

Such a method may further comprise allowing the rotor assembly to accelerate, thereby reducing the power coefficient of the rotor assembly.

In one example, the method comprises receiving a power signal indicative of a desired output power level, receiving a speed signal indicative of a rotational speed of the turbine, producing a torque signal from the power and speed signals, supplying the torque signal to the generator, thereby to control the electrical torque of the generator, the torques signal serving to reduce the electrical torque of the generator in response to increased water current flow speed.

In one example, the method comprises a first mode of operation in which a torque value of the generator is controlled in order to maximise power output from the generator, and a second mode of operation in which the torque value is controlled in dependence upon a required power level and the rotational speed of the generator, according to the equation $Q=P/\omega$, where $Q$ is the required generator torque, $P$ is the required power level, and $\omega$ is the rotational speed of the generator.

According to another aspect of the present invention, there is provided a controller for controlling a water current turbine which includes a rotor assembly arranged to drive a generator, the controller comprising a control unit operable to output a control signal for adjusting the electrical torque of a generator to control only the output power of that generator, characterised in that the control signal is a function of a required power level and a measured rotational speed of such a rotor assembly, or is a function of a required power level and a measured rotational speed of such a generator.

In use, the control signal may allow the rotor assembly to accelerate, thereby reducing the power coefficient of the rotor assembly.

In one example, the controller comprises a control unit operable to receive a power signal indicative of a desired power level, to receive a speed signal indicative of a rotational speed of a turbine, to produce a torque signal from the power and speed signals, and to supply such a torque signal to a generator, thereby to control the electrical torque of the generator, wherein, in use, the torque signal serves to reduce the electrical torque of the generator in response to increased water current flow speed.

In one example, the controller includes a control unit having a first mode of operation in which a torque value of a generator is controlled in order to maximise power output from that generator, and a second mode of operation in which the torque value is controlled in dependence upon a required power level and the rotational speed of that generator, according to the equation $Q=P/\omega$, where Q is the required generator torque, P is the required power level, and $\omega$ is the rotational speed of the generator.

## BRIEF DESCRIPTION OF THE DRAWINGS

Figure 1 is a schematic block diagram of a water current turbine embodying one aspect of the present invention;

Figure 2 is a schematic block diagram of a control unit of the water current turbine of Figure 1;

Figure 3 is a flow chart illustrating steps in a method embodying another aspect of the present invention; and

Figure 4 illustrates an example operating characteristic of a system embodying the present invention.

## DETAILED DESCRIPTION OF THE PREFERRED EMBODIMENT

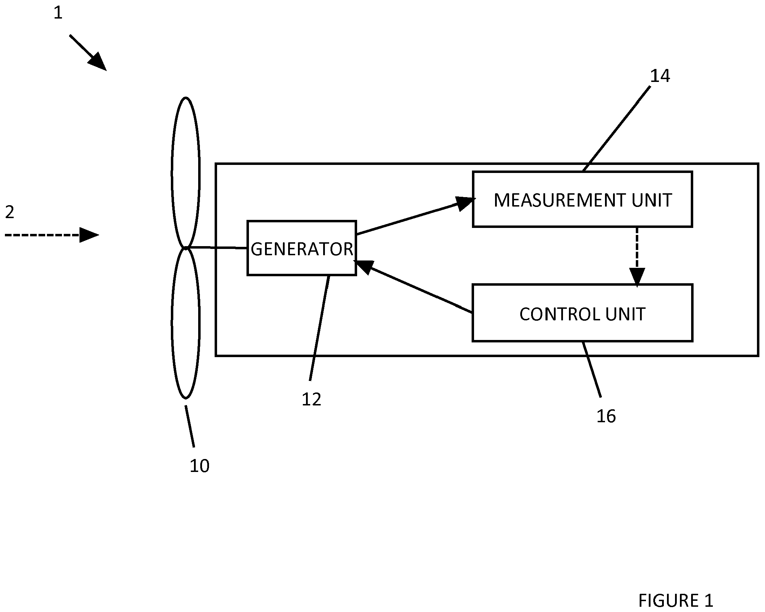

An exemplary water current turbine 1 embodying one aspect of the present invention is shown in Figure 1, and includes rotor assembly 10 which is arranged to be rotated by a water current 2. The rotor assembly 10 is arranged to transfer this rotational motion to a generator 12, via a drivetrain (not shown for the sake of clarity) which may include a gearbox and other components. As is well known and understood, the generator 12 generates electrical power from the rotational motion provided by the drivetrain.

The turbine 1 of Figure 1 also includes a measurement unit 14 and a control unit 16. The measurement unit 14 operates to measure the rotational speed, $\omega$, of

the generator 12, and supplies generator speed information to the control unit 16. The control unit 16 makes use of the speed information provided by the measurement unit 14 to provide control instructions to the generator 12, as will be described below.

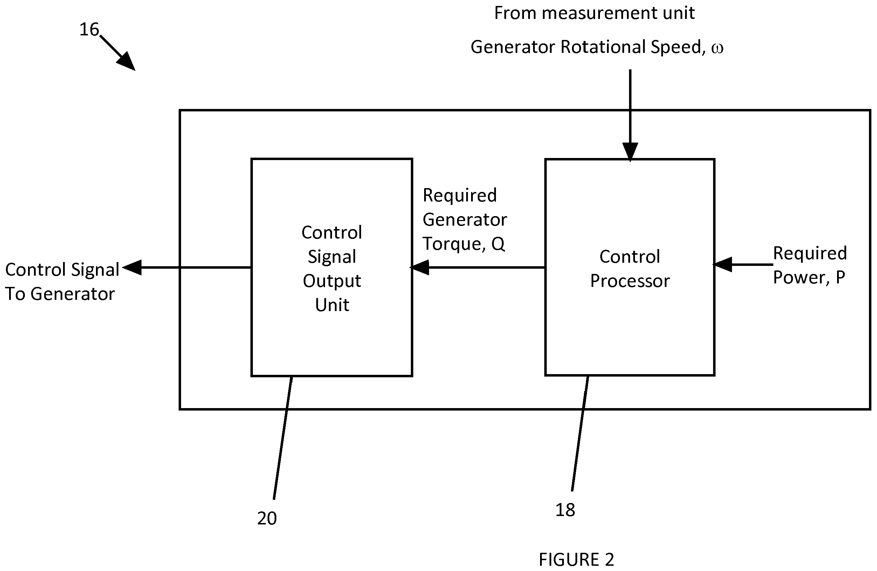

The control unit 16 is shown in more detail in Figure 2, and includes a control processor 18 and a control signal output unit 20. The control processor 18 receives generator speed information from the measurement unit 14, and uses this information in combination with required power information P to produce a required generator torque signal Q. The required power information P may be provided by an external source, such as an array controller, or may be provided internally by the control processor 18, for example in a look up table or other suitable storage device.

The required generator torque value Q is passed to the control signal output unit 20 which converts the required torque value into control signals for the generator 12. These control signals cause electrical parameters of the generator to be adjusted such that the generator torque reaches the required value Q.

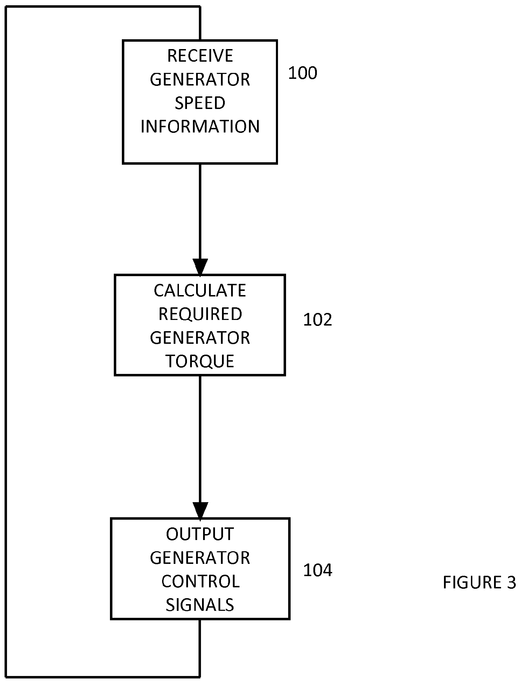

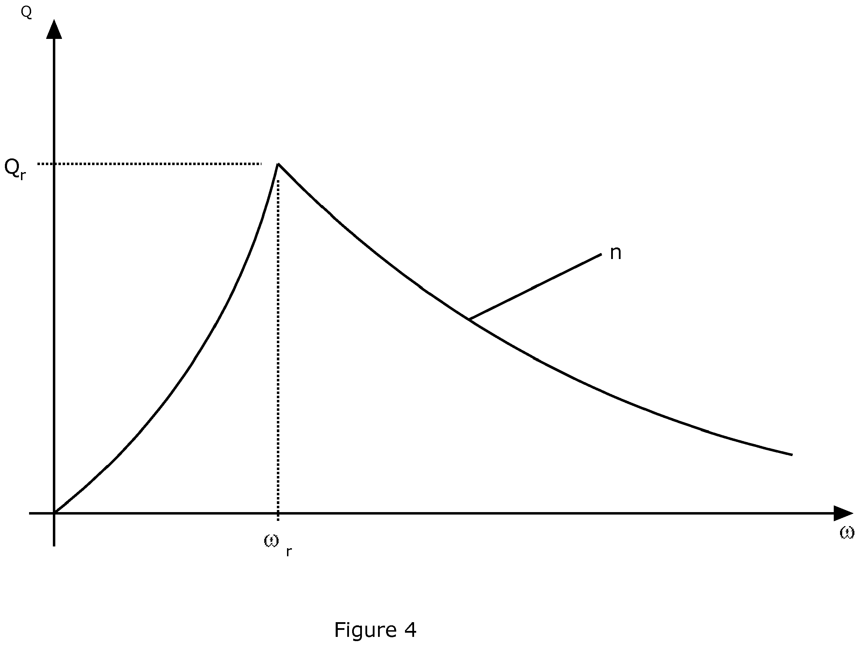

Operation of the control unit 16 will now be described with reference to Figure 2, to the flowchart of Figure 3, and to the operating characteristic shown in Figure 4.

When the water current flow speed is such that the maximum power that can be generated by the turbine is less than the rated power level of the turbine, the control unit 16 operates to maximise the power output of the generator by calculating the appropriate value of required generator torque.

When the water current flow speed is above that required by the turbine to produce the rated power level, the control processor 18 operates to control the generator 22 to produce a constant power output level, usually the rated power level. The control processor 18 receives (step 100) generator speed information from the measurement unit 14, and calculates (step 102) the required generator torque value Q. As before, this required generator torque value is passed to the control signal output unit 20 which converts the torque value Q into control signals for the generator, and then outputs (step 104) the control signals to the generator 22.

The power generated by a rotor assembly is related to the swept area of the assembly, the flow speed, and the power coefficient of the assembly. Since the swept area is fixed by the rotor diameter, and the flow speed is a naturally occurring effect, if power generation of the assembly is to be controlled, then it is necessary to control the power coefficient. The power coefficient of a rotor assembly is a function of rotor blade geometry, rotor blade pitch angle, rotational speed of the rotor assembly, and the speed of the flow passing the rotor assembly. In assemblies that make use of variable pitch blades, the pitch angle of each of the blades in the assembly is adjusted in order to reduce the power coefficient of the assembly. Such pitch control is complex and expensive, and it is desirable to make use of fixed pitch blade designs.

In an embodiment of the present invention, a rotor assembly that uses fixed pitch blades (or that has variable pitch blades that are not to be pitch controlled) is controlled so as to maintain a desired level of power output, simply by controlling the electrical torque of the generator in dependence upon the measured rotational speed of the assembly (or generator) and the desired output power level. The control scheme embodying the present invention therefore provides open loop control of the turbine. Such control is robust and does not require complex calculation and computations, and can, therefore, react quickly to changing conditions experienced by the turbine.

In a steady state flow speed, the rotor torque (the torque imparted by the rotor on the drivetrain) balances the generator torque, such that constant rotational speed and power output is achieved.

As the flow speed experienced by the rotor assembly increases, the rotor torque increases, and therefore exceeds the generator torque. Such a torque imbalance results in acceleration of the rotor assembly and drivetrain. The power output ($P_e$) of the generator is a function of generator torque (Q) and rotational speed ($\omega$):

$$P_e = Q.\omega$$

Accordingly, as the rotational speed increases, then the output power increases. In the control scheme embodying the present invention, the required $P_e$ is desired to be constant, and so the generator torque Q is controlled to reduce as rotational speed increases.

This has the effect of increasing the difference between the rotor torque and the generator torque, and so the rotor assembly and drivetrain accelerates further. In accordance with the principles of the invention, this acceleration in allowed to continue. As described above, the power coefficient of the rotor assembly is related to the flow speed, and the rotational speed of the assembly. Initially, for a given flow speed, as the rotational speed of the rotor assembly increases, the power coefficient of the assembly increases. However, the power coefficient reaches a maximum and then declines as the rotational speed increases (for the same flow speed).

An increase in flow speed results in an increase in the power coefficient, and hence an increase in the power produced by the rotor assembly. However, as the rotor assembly accelerates in accordance with the method of the present invention, the power coefficient drops (for the new flow rate) so that the power produced by the rotor assembly drops. This drop-in rotor assembly power results in a drop in generated electrical power from the generator. After a control period, the generator output power equals the desired power level. At that point, the generator torque, which is being controlled solely in dependence upon the desired power level and actual measured rotational speed in accordance with the present invention, again balances the rotor torque, so that the turbine is operating at a new equilibrium point.

As described above, in accordance with the principles of the present invention, the output power of the generator is controlled to be at a substantially constant level. Such a situation is illustrated in Figure 4, which is a graph plotting generator torque (Q) against generator rotational speed ($\omega$), and shows the torque/speed characteristics of the generator for a constant output power. Below a rated speed $\omega_r$ the generator is controlled so as to maximise its power output. At rotational speeds above $\omega_r$, the generator torque is controlled to produce a desired power level based on the generator speed. The torque curve indicated by "n" in Figure 4 represents a constant power output at the desired power level.

In contrast to previously-considered schemes, the control scheme embodying the present invention does not operate to increase the generator torque to reduce the speed of the rotor assembly, and hence the applied loads.

In contrast, the method of the present invention controls the generator torque level only to maintain a constant power output, which results in allowing the rotor assembly to accelerate or decelerate in response to flow conditions.

## Claims

1. A method of controlling a water current turbine (1) which includes a rotor assembly (10) arranged to drive a generator (12), wherein the rotor assembly (10) has fixed pitch blades, the method comprising adjusting the electrical torque of the generator (12) to control only the output power of the generator (12), **characterised in that** such adjustment being open loop and a function only of a required output power level and a measured rotational speed of the rotor assembly (10) or generator (12).

2. A method as claimed in claim 1, comprising allowing the rotor assembly (10) to accelerate, thereby reducing the power coefficient of the rotor assembly (10).

3. A method as claimed in claim 1 or 2, the method comprising receiving a power signal indicative of a desired power level, receiving a speed signal ($\omega$) indicative of a rotational speed of the rotor assembly (10) or generator (12), producing a torque signal from the power and speed signals (P, $\omega$), supplying the torque signal (Q) to the generator (12), thereby to control the electrical torque of the generator (12), the torque signal (Q) serving to reduce the electrical torque of the generator (12) in response to increased water current flow speed.

**4.** A method as claimed in claim 1 or 2, the method comprising a first mode of operation in which a torque value (Q) of the generator (12) is controlled in order to maximise power output from the generator (12), and a second mode of operation in which the torque value is controlled in dependence upon the required output power level and the rotational speed of the generator (12), according to the equation Q=P/ω, where Q is the required generator torque, P is the required power level, and ω is the rotational speed of the generator (12).

**5.** A controller for controlling a water current turbine (1) which includes a rotor assembly arranged to drive a generator (12), wherein the rotor assembly (10) has fixed pitch blades, the controller comprising a control unit (18) operable to output a control signal for adjusting the electrical torque of a generator (12) to control only the output power of that generator (12), **characterised in that** the control signal is open loop and a function of a required power level (P) and a measured rotational speed of such a rotor assembly (10), or is a function of a required power level and a measured rotational speed of such a generator (12).

**6.** A controller (16) as claimed in claim 5, comprising a control unit (16) operable to receive a power signal (P) indicative of a desired output power level, to receive a speed signal (ω) indicative of a rotational speed of such a rotor assembly (10) or generator (12), to produce a torque signal from the power and speed signals, and to supply such a torque signal to a generator (12), thereby to control the electrical torque of such a generator (12), wherein, in use, the torque signal serves to reduce the electrical torque of the generator in response to increased water current flow speed.

**7.** A controller as claimed in claim 5 or 6, wherein the control unit (16) has a first mode of operation in which a torque value of the generator (12) is controlled in order to maximise power output from that generator (12), and a second mode of operation in which the torque value is controlled in dependence upon a required power level and the rotational speed of the generator (12), according to the equation Q=P/ω, where Q is the required generator torque, P is the required power level, and ω is the rotational speed of the generator (12).

**8.** A water current turbine (1) including a rotor assembly (10) arranged to drive a generator (12), wherein the rotor assembly has fixed pitch blades, the turbine (1) being operable in accordance with a method as claimed in any one of claim 1 to 4.

**9.** A water current turbine (10) comprising a generator (12), a rotor assembly (10) arranged to drive the generator (12), and a controller (16) as claimed in any one of claim 5 to 8.

**Patentansprüche**

**1.** Verfahren zum Steuern einer Wasserstromturbine (1), die eine Rotoranordnung (10) beinhaltet, die angeordnet ist, um einen Generator (12) anzutreiben, wobei die Rotoranordnung (10) Blätter mit festem Neigungswinkel aufweist, wobei das Verfahren das Einstellen des elektrischen Drehmoments des Generators (12) umfasst, um nur die Ausgabeleistung des Generators (12) zu steuern, **dadurch gekennzeichnet, dass** eine solche Einstellung ein offener Regelkreis und eine Funktion nur eines erforderlichen Ausgabeleistungspegels und einer gemessenen Drehzahl der Rotoranordnung (10) oder des Generators (12) ist.

**2.** Verfahren nach Anspruch 1, umfassend das Zulassen, dass die Rotoranordnung (10) beschleunigt, wobei dadurch der Leistungskoeffizient der Rotoranordnung (10) reduziert wird.

**3.** Verfahren nach Anspruch 1 oder 2, wobei das Verfahren Folgendes umfasst: Empfangen eines Leistungssignals, das einen gewünschten Leistungspegel anzeigt; Empfangen eines Geschwindigkeitssignals (ω), das eine Drehzahl der Rotoranordnung (10) oder des Generators (12) anzeigt; Erzeugen eines Drehmomentsignals aus dem Leistungs- und Drehzahlsignal (P, ω); Liefern des Drehmomentsignals (Q) an den Generator (12), wobei dadurch das elektrische Drehmoment des Generators (12) gesteuert wird, wobei das Drehmomentsignal (Q) zur Reduzierung des elektrischen Drehmoments des Generators (12) als Reaktion auf die erhöhte Wasserstromströmungsgeschwindigkeit dient.

**4.** Verfahren nach Anspruch 1 oder 2, wobei das Verfahren einen ersten Betriebsmodus, in dem ein Drehmomentwert (Q) des Generators (12) gesteuert wird, um die Ausgabeleistung des Generators (12) zu maximieren, und einen zweiten Betriebsmodus umfasst, in dem der Drehmomentwert in Abhängigkeit von dem erforderlichen Ausgabeleistungspegel und der Drehzahl des Generators (12) gemäß der Gleichung Q = P/ω gesteuert wird, wobei Q das erforderliche Generatordrehmoment, P der erforderliche Leistungspegel und ω die Drehzahl des Generators (12) ist.

**5.** Steuerung zum Steuern einer Wasserstromturbine (1), die eine Rotoranordnung beinhaltet, die angeordnet ist, um einen Generator (12) anzutreiben, wobei die Rotoranordnung (10) Blätter mit festem Neigungswinkel aufweist, wobei die Steuerung eine Steuereinheit (18) umfasst, die betrieben werden kann, um ein Steuersignal für das Einstellen des elektrischen Drehmoments des Generators (12) auszugeben, um nur die Ausgabeleistung des Generators (12) zu steuern, **dadurch gekennzeichnet, dass** das Steuersignal ein offener Regelkreis und eine Funktion eines erforderlichen Leistungspegels (P) und einer gemessenen Drehzahl einer solchen Rotoranordnung (10) oder eine Funktion des erforderlichen Leistungspegels und einer gemessenen Drehzahl eines solchen Generators (12) ist.

6. Steuerung (16) nach Anspruch 5, umfassend eine Steuereinheit (16), die für Folgendes betrieben werden kann: Empfangen eines Leistungssignals (P), das einen gewünschten Ausgangsleistungspegel anzeigt; Empfangen eines Geschwindigkeitssignals (ω), das die Drehzahl einer solchen Rotoranordnung (10) oder eines solchen Generators (12) anzeigt; Erzeugen eines Drehmomentsignals aus dem Leistungs- und Geschwindigkeitssignal und Liefern eines solchen Drehmomentsignals an einen Generator (12), wobei dadurch das elektrische Drehmoment eines solchen Generators (12) gesteuert wird, wobei das Drehmomentsignal in Verwendung dazu dient, das elektrische Drehmoment des Generators als Reaktion auf eine erhöhte Wasserstromströmungsgeschwindigkeit zu reduzieren.

7. Steuerung nach Anspruch 5 oder 6, wobei die Steuereinheit (16) einen ersten Betriebsmodus, in dem ein Drehmomentwert des Generators (12) gesteuert wird, um die von diesem Generator (12) ausgegebene Ausgabeleistung zu maximieren, und einen zweiten Betriebsmodus aufweist, in dem der Drehmomentwert in Abhängigkeit von einem erforderlichen Leistungspegel und der Drehzahl des Generators (12) gemäß der Gleichung $Q = P/\omega$ gesteuert wird, wobei Q das erforderliche Generatordrehmoment, P der erforderliche Leistungspegel und ω die Drehzahl des Generators (12) ist.

8. Wasserstromturbine (1), einschließlich einer Rotoranordnung (10), die angeordnet ist, um einen Generator (12) anzutreiben, wobei die Rotoranordnung Blätter mit festem Neigungswinkel aufweist, wobei die Turbine (1) in Übereinstimmung mit einem Verfahren nach einem der Ansprüche 1 bis 4 betrieben werden kann.

9. Wasserstromturbine (10), umfassend einen Generator (12), eine Rotoranordnung (10), die angeordnet ist, um den Generator (12) anzutreiben, und eine Steuerung (16) nach einem der Ansprüche 5 bis 8.

## Revendications

1. Procédé de commande d'une turbine à courant d'eau (1) qui comprend un ensemble de rotor (10) agencé pour entraîner un générateur (12), l'ensemble de rotor (10) comportant des pales à pas fixe, le procédé consistant à régler le couple électrique du générateur (12) afin qu'il commande uniquement la puissance de sortie du générateur (12), **caractérisé en ce que** ce réglage est une boucle ouverte et n'est fonction que du niveau de puissance de sortie requis et du régime mesuré de l'ensemble de rotor (10) ou du générateur (12).

2. Procédé selon la revendication 1, consistant à permettre à l'ensemble de rotor (10) d'accélérer, réduisant ainsi le coefficient de puissance de l'ensemble de rotor (10).

3. Procédé selon la revendication 1 ou 2, le procédé consistant à recevoir un signal de puissance indiquant un niveau de puissance souhaité, recevoir un signal de vitesse (ω) indiquant une vitesse de rotation de l'ensemble de rotor (10) ou du générateur (12), produire un signal de couple à partir des signaux de puissance et de vitesse (P, ω), fournir le signal de couple (Q) au générateur (12), de manière à contrôler ainsi le couple électrique du générateur (12), le signal de couple (Q) servant à réduire le couple électrique du générateur (12) en réponse à une augmentation de la vitesse d'écoulement du courant d'eau.

4. Procédé selon la revendication 1 ou 2, le procédé comprenant un premier mode de fonctionnement dans lequel une valeur de couple (Q) du générateur (12) est commandée afin de maximiser la puissance de sortie du générateur (12), et un second mode de fonctionnement dans lequel la valeur de couple est commandée en fonction du niveau de puissance de sortie requis et de la vitesse de rotation du générateur (12), selon l'équation $Q=P/\omega$, où Q est le couple requis du générateur, P est le niveau de puissance requis et ω est la vitesse de rotation du générateur (12).

5. Dispositif de commande pour commander une turbine à courant d'eau (1) qui comprend un ensemble de rotor agencé pour entraîner un générateur (12), l'ensemble de rotor (10) comportant des pales à pas fixe, le dispositif de commande comprenant une unité de commande (18) pouvant fonctionner pour délivrer un signal de commande permettant de régler le couple électrique d'un générateur (12) afin de ne commander que la puissance de sortie dudit générateur (12), **caractérisé en ce que** le signal de commande est une boucle ouverte et est fonction d'un niveau de puissance requis (P) et une vitesse de rotation mesurée dudit ensemble de rotor (10) ou est fonction d'un niveau de puissance requis et de la vitesse de rotation mesurée dudit générateur (12).

6.  Dispositif de commande (16) selon la revendication 5, comprenant une unité de commande (16) pouvant fonctionner pour recevoir un signal de puissance (P) indiquant un niveau de puissance de sortie souhaité, pour recevoir un signal de vitesse (ω) indiquant une vitesse de rotation dudit ensemble de rotor (10) ou dudit générateur (12), pour produire un signal de couple à partir des signaux de puissance et de vitesse, et pour fournir ce signal de couple à un générateur (12), de manière à contrôler ainsi le couple électrique dudit générateur (12), dans lequel, lorsqu'il est utilisé, le signal de couple permet de réduire le couple électrique dudit générateur en réponse à une augmentation de la vitesse d'écoulement du courant d'eau.

7.  Dispositif de commande selon la revendication 5 ou 6, dans lequel l'unité de commande (16) comporte un premier mode de fonctionnement dans lequel une valeur de couple du générateur (12) est commandée afin de maximiser la puissance de sortie de ce générateur (12), et un second mode de fonctionnement dans lequel la valeur de couple est commandée en fonction d'un niveau de puissance requis et de la vitesse de rotation du générateur (12), selon l'équation Q=P/ω, où Q est le couple requis du générateur, P est le niveau de puissance requis et ω est la vitesse de rotation du générateur (12).

8.  Turbine à courant d'eau (1) comprenant un ensemble de rotor (10) agencé pour entraîner un générateur (12), l'ensemble de rotor comportant des pales à pas fixe, la turbine (1) pouvant fonctionner conformément à un procédé selon l'une quelconque des revendications 1 à 4.

9.  Turbine à courant d'eau (10) comprenant un générateur (12), un ensemble de rotor (10) agencé pour entraîner le générateur (12), et un dispositif de commande (16) selon l'une quelconque des revendications 5 à 8.

FIGURE 1

From measurement unit
Generator Rotational Speed, ω

Control Signal Output Unit

Control Processor

Required Generator Torque, Q

Control Signal To Generator

Required Power, P

16

20

18

EP 2 656 499 B1

FIGURE 2

RECEIVE
GENERATOR
SPEED
INFORMATION — 100

CALCULATE
REQUIRED
GENERATOR
TORQUE — 102

OUTPUT
GENERATOR
CONTROL
SIGNALS — 104

FIGURE 3

Figure 4

EP 2 656 499 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100109325 A
- WO 2009016508 A
- JP 2003319694 A
- US 2005012339 A